# EUROPEAN PATENT APPLICATION

(11) **EP 1 616 684 A1**
(43) Date of publication of application: **18.01.2006**
(21) Application number: 04726644.0
(22) Date of filing: 08.04.2004
(51) Int. Cl.: B29B 7/58, B29B 7/38, B29B 7/84

(54) **SCREW-TYPE KNEADING/EXTRUDING MACHINE**

(30) Priority: 10.04.2003 JP 2003106295
(71) Applicant: THE JAPAN STEEL WORKS, LTD., Tokyo 100-0006 (JP)
(72) Inventor: YASUSAKA, Kenichi, The Japan Steel Works, Ltd., Aki-ku, Hiroshima-shi Hiroshima 736-8602 (JP); KAKIZAKI, Jun, The Japan Steel Works, Ltd., Aki-ku, Hiroshima-shi Hiroshima 736-8602 (JP); ODA, Norimasa, The Japan Steel Works, Ltd., Aki-ku, Hiroshima-shi Hiroshima 736-8602 (JP); IWAMOTO, Yoshihiko, The Japan Steel Works, Ltd., Aki-ku, Hiroshima-shi Hiroshima 736-8602 (JP)
(74) Representative: Godwin, Edgar James
(86) International application number: PCT/JP2004/005059
(87) International publication number: WO 2004/089587

(57) **Abstract**

A screw-type kneading/extruding machine according to the present invention is constructed such that a screw (3) that is positioned in correspondence with a vent opening (4) formed in a cylinder (2) has a screw piece (10) with surface-renewing ability. The structure enables deaeration without involving temperature rise and quality deterioration of a raw material.

## Description

### Technical Field

The present invention relates to a screw-type kneading/extruding machine, and more specifically to a novel improvement for achieving enhanced deaeration performance by providing a screw piece with surface-renewing ability to a screw-type kneading/extruding machine to prevent polymer degradation without involving a temperature rise.

### Background Art

Synthetic resin materials produced by chemical synthesis reaction generally contain a significant amount of volatile components remaining therein. When such a synthetic resin material containing a significant amount of volatile components is used, during various subsequent processing steps, air bubbles develop in the product being produced, resulting in a deterioration in the quality of the product, or the volatile components are volatilized to contaminate the working environment. In order to overcome this problem, devolatilization processing is conventionally performed to remove volatile components from a synthetic resin material produced by chemical synthetic reaction.

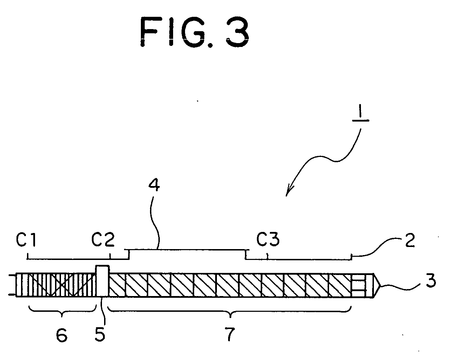

A screw-type kneading/extruding machine constructed as shown in Fig. 3 is normally used to perform devolatilization processing on a thermoplastic synthetic resin material (see Non-patent Document 1). Fig. 3 is a partial structural view showing the portion of a conventional screw-type kneading/extruding machine from the intermediate portion (the left end in Fig. 3) to the downstream end portion (distal end portion: the right end in Fig. 3) thereof. As shown in Fig. 3, reference numeral 1 denotes the screw-type kneading/extruding machine. The screw-type kneading/extruding machine 1 is composed of a barrel-like cylinder 2 and a screw 3 inserted in the cylinder 2 so as to be rotatable. The cylinder 2 is formed by connecting a plurality of cylinder blocks together. A vent opening 4 that is longer than is normally required is formed in the axial direction of the cylinder 2 at a position corresponding to the portion of the screw-type kneading/extruding machine 1 from the intermediate portion to the downstream side thereof. The vent opening 4 is open to the atmosphere or connected with a vacuum pumping device (not shown) as required. It should be noted that the cylinder blocks can be adjusted in temperature.

The screw 3 is formed by aligning and arranging plural kinds of screw pieces selected as appropriate in a suitable order and integrating them together. That is, in the screw 3, a seal portion 5 formed by a seal ring is arranged at a position upstream of the vent opening 4, an agitating portion 6 formed by a plurality of agitating screw pieces having an agitating function is arranged on the upstream side of the seal portion 5, and a kneading/transporting portion 7 formed by commonly used kneading screw pieces is arranged on the downstream side of the seal portion 5, that is, in the portion extending from the seal portion 5 to the distal end via the vent opening 4. It should be noted that screw pieces having a transporting/kneading function are arranged on the upstream side (not shown) (the left-hand side in Fig. 3) of the agitating portion 6. Examples of the screw pieces forming the agitating portion 6 include feed, return, and neutral type kneading screw pieces, twist kneading screw pieces, rotary screw pieces, and cut-flight screw pieces. Examples of the screw pieces forming the kneading/transporting portion 7 include half flight screw pieces and full flight screw pieces.

In the screw-type kneading/extruding machine 1 constructed as described above, devolatilization processing for removing volatile components from a thermoplastic synthetic resin material is performed as follows. In an upstream portion (not shown) (the left-hand side in Fig. 3) of the screw-type kneading/extruding machine 1, the thermoplastic synthetic resin material is continuously supplied into the cylinder 2 at a predetermined supply rate in the state where the respective cylinder blocks of the cylinder 2 are temperature-adjusted to a predetermined temperature, a vacuum pumping device is driven at a predetermined degree of vacuum in the case where such a vacuum pumping device is connected to the vent opening 4, and the screw 3 is rotated at a predetermined RPM. The thermoplastic synthetic resin material thus supplied into the cylinder 2 is heated by the cylinder 2 and transported in the downstream direction (the rightward direction in Fig. 3) while undergoing kneading by the rotating screw 3, before reaching the agitating portion 6. In the agitating portion 6, the thermoplastic synthetic resin material undergoes melting and kneading by being strongly agitated, and the transport of the thermoplastic synthetic resin material is blocked by the seal portion 5 located on the downstream side, resulting in a high pressure state.

The thermoplastic synthetic resin material having thus reached the high-pressure, molten state in the agitating portion 6 passes through a narrow gap between the outer periphery of the seal ring of the seal portion 5 and the inner periphery of the cylinder 2 before being transported to the kneading/transporting portion 7 in the cylinder 2, which is opened to the atmospheric pressure or sucked up into a negative pressure due to the formation of the vent opening 4. The thermoplastic synthetic resin material having passed the seal portion 5 undergoes a drop in pressure from a high pressure state to a low pressure state at a stroke, so the volatile components present near the surface thereof expand in the form of air bubbles; the volatile components are discharged as the air bubbles burst to be exhausted from the vent opening 4. In the kneading/transporting portion 7, as the thermoplastic synthetic resin material is transported while being kneaded, the inner portion of the thermoplastic synthetic resin material and its surface layer portion are constantly interchanged to thereby renew the surface portion, and new air bubbles successively develop and burst near the surface, so the volatile components are discharged. Thereafter, the thermoplastic synthetic resin material having reached the downstream end of the kneading/transporting portion 7 is extruded to the outside via a die (not shown) provided at the distal end of the cylinder 2.

### Non-patent Document 1

"Molding process", page 756, Vol.6, No.11 (1994) from Sigma Publishing Co.,

Since the conventional screw-type kneading/extruding machine for devolatilization is constructed as described above, there are the following problems. That is, the following drive methods are used to achieve a high degree of devolatilization. The first method involves increasing the screw RPM to increase the temperature of the thermoplastic synthetic resin material near the vent opening, so the volatile components can be readily vaporized to expand. The second method involves connecting a vacuum pumping device to the vent opening to increase the degree of vacuum at the vent opening, thereby facilitating the expansion and bursting of the air bubbles of the volatile components and powerfully sucking up and exhausting the discharged volatile components. However, increasing the temperature of the thermoplastic synthetic resin material according to the first method degrades the physical properties of the thermoplastic synthetic resin material, resulting in a deterioration in quality. Further, increasing the degree of vacuum by connecting the vacuum pumping device according to the second method leads to an additional cost for installing new vacuum equipment that provides a high degree of vacuum or an increase in the running power cost required for obtaining a high degree of vacuum.

The present invention has been made to solve the above-mentioned problems. Specifically, it is an object of the present invention to provide a screw-type kneading/extruding machine that is equipped with a screw piece with surface-renewing ability to achieve enhanced deaeration performance by preventing polymer degradation without involving a temperature rise.

### DISCLOSURE OF THE INVENTION

A screw-type kneading/extruding machine according to the present invention is constructed such that a screw positioned in correspondence with a vent opening formed in a cylinder includes a screw piece with surface-renewing ability, and that the screw piece with surface-renewing ability is disposed within an axial length range of 10 to 100% with respect to an axial opening length of the vent opening.

### Brief Description of the Drawings

Fig. 1 is a schematic structural view showing a portion of a screw-type kneading/extruding machine according to the present invention.
Fig. 2 is a graph illustrating a comparison between the results of tests respectively conducted by using the screw-type kneading/extruding machine according to the present invention and a conventional screw-type kneading/extruding machine.
Fig. 3 is a structural view showing a portion of the conventional screw-type kneading/extruding machine.

### Best Mode for carrying out the Invention

### Embodiment 1

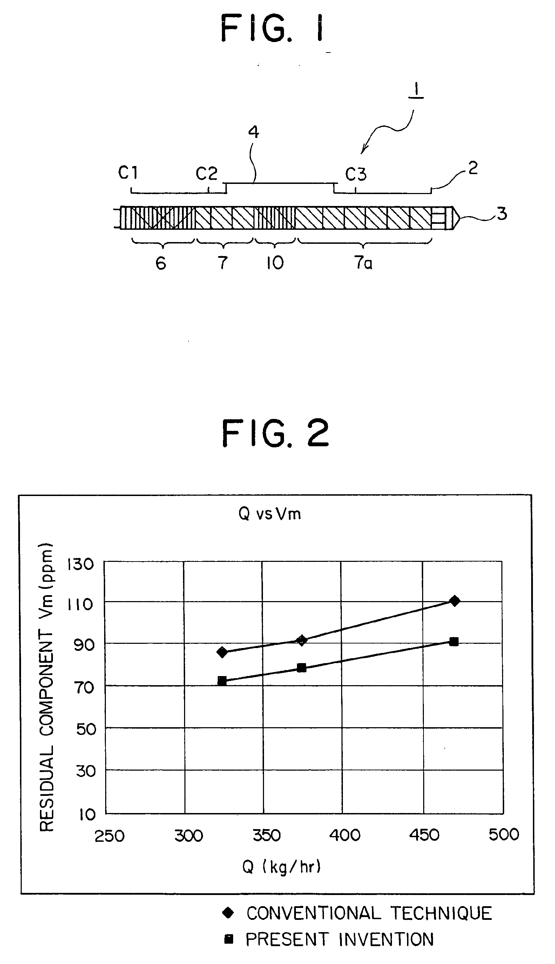

Hereinbelow, preferred embodiments of a screw-type kneading/extruding machine according to the present invention will be described with reference to the drawings. It should be noted that the same reference symbols are used to describe portions that are the same as or equivalent to those of the prior art example. Fig. 1 is a partial structural view showing the portion of the screw-type kneading/extruding machine according to the present invention from the intermediate portion (the left end shown in Fig. 1) to the downstream end portion (distal end portion: the right end in Fig. 1) thereof. Referring to Fig. 1, reference numeral 1 denotes the screw-type kneading/extruding machine. The screw-type kneading/extruding machine 1 is composed of a barrel-like cylinder 2 and a screw 3 rotatably inserted in the cylinder 2. The cylinder 2 is composed of a plurality of cylinder blocks that are connected together and is formed by a vented cylinder having a vent opening 4 that is longer than is normally required, the vent opening 4 being formed in the axial direction of the cylinder 2 at a position corresponding to the portion of the screw-type kneading/extruding machine 1 from the intermediate portion to the downstream side thereof. The vent opening 4 is open to the atmosphere or connected with a vacuum pumping device (not shown) as required. It should be noted that the cylinder blocks can be adjusted in temperature.

The screw 3 is formed by aligning and arranging plural kinds of screw pieces selected as appropriate in a suitable order and integrating them together. That is, in the screw 3, an agitating portion 6 formed by a plurality of agitating screw pieces having an agitating function is arranged on a position upstream of the vent opening 4, and a kneading/transporting portion 7 formed by commonly used kneading screw pieces is arranged in the portion of the screw-type kneading/extruding machine 1 from the downstream end portion of the agitating portion 6 to the distal end of the screw-type kneading/extruding machine 1, with a plurality of screw pieces 10 with surface-renewing ability which has an agitating the position corresponding to the vent opening 4. It should be noted that screw pieces having a transporting/kneading function are arranged on the upstream side (not shown)(the left-hand side in Fig. 1) of the agitating portion 6.

Examples of the screw pieces forming the agitating portion 6 include known feed, return, and neutral type, or single/multiple thread kneading screw pieces, twist kneading screw pieces, rotary screw pieces, and cut-flight screw pieces. Examples of the screw pieces forming the kneading/transporting portion 7a include half flight screw pieces and full flight screw pieces. Each of the screw pieces with surface-renewing ability serving as the agitating portion is arranged within the axial length range of 10 to 100% with respect to the axial opening length of the vent opening 4 according to the physical properties of the thermoplastic synthetic resin material to be devolatilized, the content of volatile substances therein, the separation property of the volatile substances, or the like. Each of the screw pieces with surface-renewing ability is composed of a feed type kneading screw piece, twist kneading screw piece, rotary screw piece, cut-flight screw piece, or the like. It should be noted that the L/D ratio of each screw piece 10 with surface-renewing ability (constituting the agitating portion) ranges from 0. 1 to the same L/D ratio as the axial opening length.

In the screw-type kneading/extruding machine 1 constructed

In the screw-type kneading/extruding machine 1 constructed as described above, devolatilization processing for removing volatile components from the thermoplastic synthetic resin material are performed as follows. In an upstream portion (not shown) (the left-hand side in Fig. 1) of the screw-type kneading/extruding machine 1, the thermoplastic synthetic resin material is continuously supplied into the cylinder 2 at a predetermined supply rate in the state where the respective cylinder blocks of the cylinder 2 are temperature-adjusted to a predetermined temperature, a vacuum pumping device is driven at a predetermined degree of vacuum in the case where such a vacuum pumping device is connected to the vent opening 4, and the screw 3 is rotated at a predetermined RPM. The thermoplastic synthetic resin material thus supplied into the cylinder 2 is heated by the cylinder 2 and transported in the downstream direction (the rightward direction in Fig. 1) while undergoing kneading by the rotating screw 3, before reaching the agitating portion 6. In the agitating portion 6, the thermoplastic synthetic resin material undergoes melting and kneading while being strongly agitated.

The thermoplastic synthetic resin material having thus reached a high-temperature, molten state in the agitating portion 6 is transported through the kneading/transporting portion 7 inside the cylinder 2 in the downstream (distal end: the right-hand side in Fig. 1) while undergoing kneading. As the thermoplastic synthetic resin material in the high-temperature, molten state is transported through the kneading/transporting portion 7 in a lower-pressure state, the volatile components present near the surface thereof expand into air bubbles, which then burst. Further, as the thermoplastic synthetic resin material is kneaded, the inner portion of the thermoplastic synthetic resin material and its surface layer portion are constantly interchanged to thereby renew the surface portion, and air bubbles of the volatile components successively develop near the renewed surface and then burst, so the volatile components are discharged. At the position of the vent opening 4, the thermoplastic synthetic resin material undergoes strong agitation by the screw pieces 10 with surface-renewing ability. Accordingly, the renewal of the surface portion is performed more frequently so that the volatile components are discharged in large quantities in the same way as described above. The volatile components discharged from the burst air bubbles are exhausted from the vent opening 4. Thereafter, the thermoplastic synthetic resin material having reached the downstream end of the kneading/transporting portion 7a is extruded to the outside in the form of a strand via a die (not shown) provided at the distal end of the cylinder 2.

The screw-type kneading/extruding machine 1 described above is applicable to a single-screw-type kneading/extruding machine and a multiple-screw-type kneading/extruding machine such as a two-screw or three-screw type one. Further, in a multiple-screw-type kneading/extruding machine, the screws are in complete intermeshing with each other so as to provide good kneading property and surface renewal property. While in the structural view of Fig. 1 the long vent opening 4 is provided at one location, the vent opening is not limited to a long one, nor does it need to be provided only at one location. Depending on the physical properties and the like of the thermoplastic synthetic resin material, vent openings 4 having a normal axial length and/or long vent openings 4 may be provided at a plurality of locations, for example, at two or three locations. Accordingly, the screw pieces 10 with surface-renewing ability may be arranged at a plurality of positions corresponding to the respective vent openings 4. Further, the screw used may be a single type or multiple screw type one.

### (Example)

By applying the present invention, a test is carried out according to the following specifications.

### Testing device

Kneading/extruding machine: TEX65αII-35BW-V(2V)(manufactured by The Japan Steel Works, LTD.)
(Two-screw-type kneading/extruding machine, screw diameter: 65 mm, screw length L/screw diameter D: 35, one long vent opening)
Screw RPM: 60 to 600 rpmMain motor capacity: 300 kW

### Thermoplastic synthetic resin material tested

Polycarbonate powder
Molecular weight: 25,500
Volatile components (Vm): 196 ppm

Table 1 and Fig. 2 illustrate a comparison between the results of tests respectively conducted by using the screw-type kneading/extruding machine according to the present invention and the conventional screw-type kneading/extruding machine.

**Table 1**

| Screw/ cylinder construction | Ns (rpm) | Q (kg/hr) | Esp(kWh /kg) | Tp(°C) | Vacuum degree (torr) | Residual Vm (ppm) |
|---|---|---|---|---|---|---|
| (Conventional construction) | 250 | 325 | 0.161 | 327 | 5 | 85 |
| | 250 | 375 | 0.163 | 326 | 5 | 91 |
| | 250 | 470 | 0.168 | 325 | 5 | 111 |
| (Present invention) | 250 | 325 | 0.166 | 327 | 5 | 71 |
| | 250 | 375 | 0.166 | 326 | 5 | 78 |
| | 250 | 470 | 0.168 | 325 | 5 | 91 |

| | | | | | | |
|---|---|---|---|---|---|---|
| Ns: screw RPM | | | | | | |
| Q: polymer throughput | | | | | | |
| Esp: specfic energy | | | | | | |
| Tp: outlet polymer temperature | | | | | | |
| Vm: volatile component | | | | | | |

### Industrial Applicability

The screw-type kneading/extruding machine according to the present invention shown in Figs. 1 and 2, which are constructed as described above, provides the following effects. That is, in the screw-type kneading/extruding machine, the screw located at the position corresponding to the vent opening formed in the cylinder is formed by the screw pieces with surface-renewing ability. Accordingly, at the vent opening, the thermoplastic synthetic resin material undergoes strong agitation by the surface screw pieces with surface-renewing ability so the surface portion is frequently renewed, whereby the volatile components can be readily discharged in large quantities.

Therefore, it is not necessary to drive the screw at high RPM in order to increase the temperature of the thermoplastic synthetic resin material, nor is it necessary to drive the vacuum pumping device, which is connected to the vent opening, at a high degree of vacuum in order to facilitate the expansion and bursting of the air bubbles of the volatile components and to powerfully suck up and exhaust the discharged volatile components. As a result, polymer degradation is prevented without increasing the temperature of discharged polymer to thereby prevent a deterioration in quality, and the cost for installing new high-vacuum equipment or the running power cost for obtaining a high vacuum becomes unnecessary. Further, an increase in energy consumption can be prevented.

## Claims

1. A screw-type kneading/extruding machine **characterized in that** a screw (3) positioned in correspondence with a vent opening (4) formed in a cylinder (2) comprises a screw piece (10) with surface-renewing ability.

2. A screw-type kneading/extruding machine according to Claim 1, **characterized in that** the screw piece (10) with surface-renewing ability is disposed within an axial length range of 10 to 100% with respect to an axial opening length of the vent opening (4).
